Europäisches Patentamt

European Patent Office

Office européen des brevets

(19)

(11) **EP 1 288 795 A1**

(12) **EUROPEAN PATENT APPLICATION**

(43) Date of publication:
05.03.2003 Bulletin 2003/10

(51) Int Cl.7: **G06F 17/30**

(21) Application number: 01307210.3

(22) Date of filing: **24.08.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **BRITISH TELECOMMUNICATIONS
public limited company
London EC1A 7AJ (GB)**

(72) Inventor: **The designation of the inventor has not
yet been filed**

(74) Representative: **Maggs, Michael Norman et al
Kilburn & Strode
20 Red Lion Street
London WC1R 4PJ (GB)**

(54) **Query systems**

(57)    A computer query system and method enhances the results produced by standard queries, for example in search engines, by filtering and optionally ordering the results on the basis of affinity with individuals known to the search initiator, or individuals within the search initiator's Personal Social Network. The system allows users searching databases for information to evaluate the results of a query with reference to feedback that has previously been provided by others within the user's social network. This allows users to make informed decisions based on how much they value the opinions of others within their personal network.

**Figure 1**

**Description**

The present invention relates to computer based queries systems and has applications in fields such as search engines, instant messaging services and knowledge management systems.

Keyword based query systems, such as for example those used by internet search engines, have been available for many years. Because of the large number of results or "hits" typically returned by such search engines, there has been increasing interest in finding ways of filtering and/or prioritising the results so that they can be presented to the user or "search initiator" in a meaningful form. Typically, weighting factors may be applied to the returned results in some way, so that the more interesting more relevant results appear towards the top of the returned list. One way of doing this, used by some internet search engines, is to assign "popularity scores" to URLs based upon the number of times the URL has been accessed by the search engine website.

Another approach to prioritisation is to use Collaborative Based Filtering (CBF) scheme. These systems find relevant documents by looking at ratings and recommendations (which may be explicit or implicit) made by others. Examples of Collaborative Based Filtering schemes include the following:

*Information Forwarding Systems (IFS):*

These systems allow people to forward information they find interesting to groups of people with a similar interest. These systems are sometimes called Active Collaborative Filtering systems because, here, users explicitly select the group of people to which they recommend an item. The system's role is simply to forward the material to a selected group.

*Recommender Systems (RS):*

These systems find items (documents, movies, products) relevant to a particular user by analysing the preferences of other users with similar profiles. These systems are sometimes called Passive Collaborative Filtering Systems since users do not recommend items to any one in particular. Instead, the system determines what items should be recommended to whom, based on similarities between user preferences. A licensable example of this technology can be found at NetPerceptions (www.netperceptions.com). This solution is used by e.g. online bookstores and provides a recommended reading list following a user's purchasing profile, weighed against other users who have purchased similar books.

*"Top N" Systems (TNS):*

These systems allow a user to navigate through a list of the most popular documents in a given collection. These systems differ from Recommender Systems insofar as their recommendation is not based on a priori knowledge about a user's particular interest, but only on the overall popularity of the documents themselves.

Other approaches allow authors to rate their own websites for others to use and to prioritise or filter based upon those ratings. Such system are used by service providers who wish to provide "safe" content, for example www. safesurf.com.

According to a first aspect of the present invention there is provided a computer query method comprising receiving a query from a search initiator, carrying out a search for information on the basis of the query and filtering the search results according to the affinity of each result with individuals within a linked network of individuals associated with the search initiator.

According to a second aspect of the invention there is provided a computer query system comprising means for receiving a query from a search initiator, means for carrying out a search for information on the basis of the query, and means for filtering the search results according to the affinity of each result with individuals within a linked network of individuals associated with the search initiator.

The invention further extends to a computer program for carrying out the above method and to a data carrier which carries such a computer program.

The method of the invention will be referred to within this patent application by the term "Affinity based queries" (ABQ). ABQ allows users searching databases, or the internet, an ability to evaluate the results returned by virtue of inter-personal relationships in the context of their social network. The user can, in that way, be presented preferentially with results which have been recommended by people known to him or her, or otherwise with in his or her social network.

In the preferred embodiment, results are categorised not only by the degree with which they fit the search criteria (this is currently done), but they are further categorised with metadata describing the relationship between the search initiator and an individual within the network who has refereed, rated or is otherwise acquainted with one of the results. This allows users to make informed decisions based on the extent to which they value the opinion, or the prior actions, of other members of their social network.

The invention is preferably implemented through a combination of relational databases, instant messaging (or some other community tool holding information on the social network), along with other query software to implement the ABQ rules and to drive the process of traversing through the social network. This is preferably implemented through nested SQL queries and graphing techniques.

In a preferred embodiment, an instant messaging application or an internet search engine forms the key service entry point. A relational database backend holds information on the social network, and uses the internal relationships within the network to carry out filtering and/or sorting on the results of a standard search ( a keyword-based search). Whenever information is publicly exchanged between individuals within the network (either explicitly or automatically/implicitly) the system preferably intercepts the exchange and records entries in the data base defining metadata links which indicate:

1. Where the information is,
2. Summaries of that information,
3. Keywords about the information,
4. Any ratings that may have been applied (e.g. to an article product or individual),
5. Details of the individual who referred it,
6. Details of the individual to whom it was referred,
7. Details of the time and date when it was referred.

Then, whenever a user initiates an ABQ, the system preferably uses that person's entry in the database as the root node in the search graph and begins to percolate out through the social network conducting nested queries and table joins between persons and content, to a predefined distance or order, to retrieve the information.

In order to encourage involvement of the individuals within the network, reward feedback may be provided to the individual who recommended to the user the search result that the user decides is "best". For example, if a user is looking for an article on a particular subject, and selects an article on the internet that has been recommended by an individual X, X receives a reward in the form of an enhancement to his or her "action value". Individuals with high action values will have made good recommendations many times and other users will know that they can be relied upon. Preferably, the system allows the user the opportunity to sort the search results by the action values of the referring individuals thereby insuring that the recommendations from trusted individuals appear at the top of the list.

The invention may be carried into practice in a number of ways and one specific embodiment will now be described, by way of example, with reference to the accompanying drawings, in which:

Figure 1 shows an exemplary Personal Social Network (PSN):
Figure 2 illustrates schematically the main apparatus elements of an embodiment of the present invention:
Figure 3 illustrates the linking of the PERSON tables:
Figure 4 illustrates the action tables:
Figure 5 shows the method of registering and logging in referees in the database:
Figure 6 shows the method of modifying PERSON records:
Figure 7 shows the method of deleting PERSON records:
Figure 8 shows the method of storing relations:
Figure 9 shows the method of deleting relations:
Figure 10 shows the method of summarising and storing actions:
Figure 11 shows a method of processing incoming query parameters:
Figure 12 shows the method of building an in-memory view:
Figure 13 shows a digraph method of building in-memory views:
Figure 14 shows a digraph and binary tree method of building in-memory views, avoiding duplicates:
Figure 15 shows the method of filtering key word matches:
Figure 16 shows the method of ordering result items by rating:
Figure 17 shows how edge weightings may vary throughout a Personal Social Network:

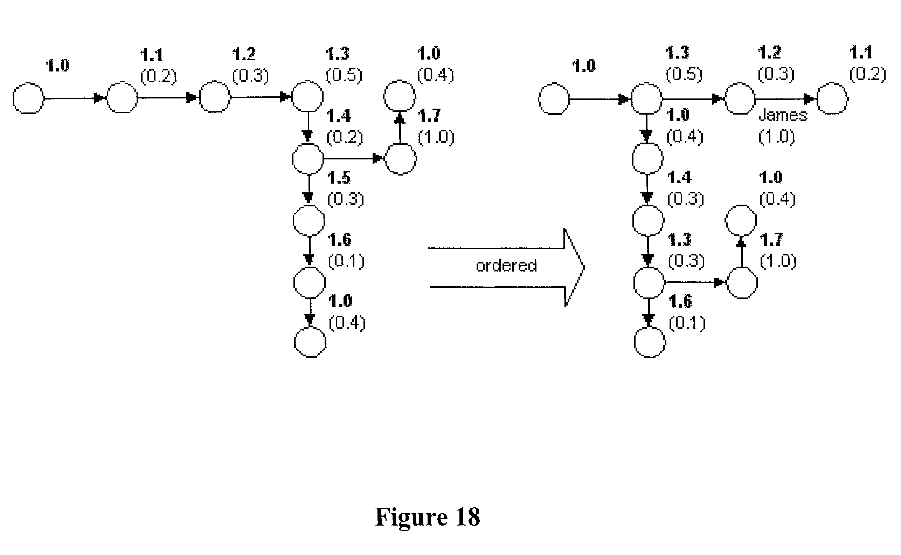

Figure 18 shows the ordering of the in-memory view by relation:
Figure 19 shows the ordering of the results by relation:
Figure 20 shows the method of encoding and presenting the result list; and
Figure 21 shows the method of feeding back result actions.

## 1 Introduction

The preferred embodiment of the invention uses a system called Affinity Based Queries (ABQs) to improve the relevance of search results to the person requesting them (known as the "search initiator"). In very general terms, the system works as follows:

1. The search initiator first does a standard keyword search e.g. to search for a particular book (a bookshop website).

2. The search returns a list of results or "hits" which are then filtered on the basis of information derived from a Personal Social Network (PSN) of which the search initiator is a member. Personal Social Networks will be described in more detail in section 2. The filter selects from the results list hits which are associated in some predefined way with others in the PSN, for example individuals who have rated the book. The other hits are discarded. This produces a list of filtered result items.

3. The result items are then ordered in some user-defined order for presentation to the search initiator. they could be ordered, for example, by the rating which other individuals have provided, or by the relationship between the search initiator and the other individuals (e.g. ratings by close friends take precedence), or they could be ordered by result "action" (e.g. putting at the top of the list recommendations by an individual whose previous recommendations have been good).

4. Finally, the system presents the sorted and filtered list of results to the search initiator along with an indication, in each case, of which individual within the PSN has recommended the book, and how that individual is related within the PSN to the search initiator.

It will be appreciated of course that Affinity Based Queries can be used for all types of information retrieval. We will refer to the information to be retrieved as a "document", it being understood that that term includes not only traditional documents in electronic form, but also internet web pages and, more generally, all types of searchable information whether held with in a database or otherwise. When we say, for example, that the search initiator is looking for "books" what we really mean is that he or she is searching one or more databases, typically held on the internet, which contain not books themselves but information about books.

A more formal description of the preferred embodiment will now be set out. The reader is referred to the glossary of terms, at the end of the specific description, which provides an explanation of certain expressions.

When an Affinity Based Query (ABQ) is run, it returns a result list which consists of a number of result items. Each result item has some association with the "referee" who is somebody within the search initiator's PSN who is either directly associated with the result item, or who is indirectly associated with the item through being related to someone else within the search initiator's PSN. Along with the result, each result item may also indicate a "relation" (showing how the referee is related to the search initiator through the PSN), along with a "rating" (an award which has been applied by a referee to a result).

Each result item in an ABQ result list is presented in the form:

**<referee><relation><result><rating>.**

Order is not important, nor is the frequency of in which terms are used.

In the above expression, the following terms are used:

* **referee -** mandatory term, a person associated with a result;
* **relation -** optional term, relating a referee to the search initiator through the PSN;
* **result -** mandatory term, the location (e.g. URL) of something returned from a query;
* **rating -** optional term, an award applied by a referee to a result.

The result of an ABQ is a result list in which keyword matches are "annotated" or "embellished" by additional information specifying not only what other referees thought of the result but how those referees are associated with or linked to the search initiator.

Taking the example of an on line bookstore, a result item might read:

e.g. *"Kate (**referee**), who knows Nick (**relation**), purchased 'Wuthering Heights' by Emily Bronte (**result**)"*

Or, consider a search engine. Rather than just keyword-match a URL query, ABQ's return results referencing other persons known by the search initiator who have visited/rated the URL:

e.g. *"Dan (referee), recommended http://www.domain.com/ (result), awarding it 4/5 (rating)"*

Or, consider skills searching in an organisation. Rather than just return persons possibly unknown to the user, ABQ's return results in relation to someone known by the search initiator:

e.g. *"Andy (referee), who knows Nick (relation), knows Oracle (result), and rates himself as EXPERT (rating)"*

Or finally, consider an article rating:

*e.g. "Jim (referee), who Andy knows (relation), who knows Nick (relation), rated article X (result), as FAIR (rating)"*

Of course, in the above examples the text in brackets would not actually be seen by the user: it is included merely to show how the expressions are made up from the basic terms which include referee, relation, result and rating.

By decorating standard database query results with respect to someone known by the search initiator, ABQ's allow users to make more informed decisions about which result to follow first, and a reference point to qualify that order with (i.e. the referee).

As mentioned above, the result list may be ordered in a variety of different ways, according to the needs of the search initiator. That will be described in more detail below.

## 2. Personal Social Networks (PSN)

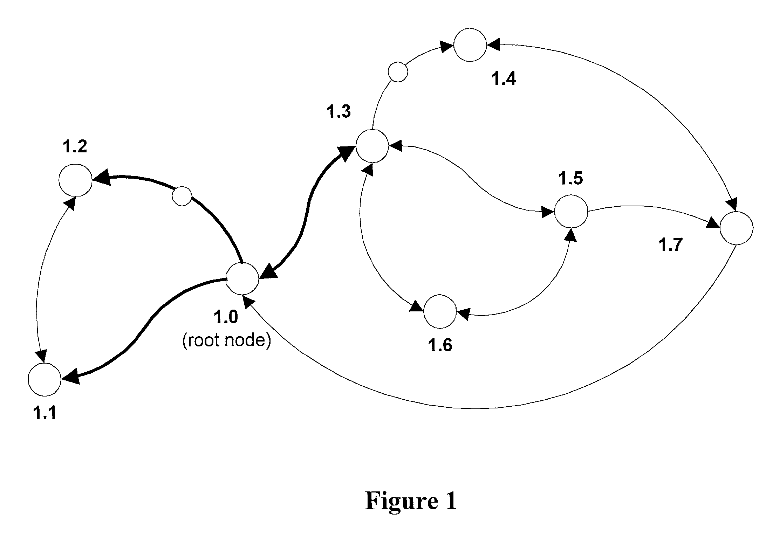

Personal Social Networks are, per se, a known concept. Such a network connects an individual to a number of other individuals with in a community (real or virtual). A PSN can be described by means of a directed graph (a "digraph" ). An example is shown in figure 1. Each node in the digraph represents an individual, and the directed edges between the nodes represent relationships. Relationships are

"reflexive" in nature and do not necessarily imply reciprocity: thus, a may know b, but b may not know of a.

In figure 1, the first order PSN represents those nodes that can be reached in one "hop" from the root node (in this case the search initiator), the second order network those nodes that can be reached in two "hops", and so on.

In addition to the nodes, representing a community of individuals, the PSN of this embodiment also stores information on "actions". These will be discussed in more detail in section 3, below, but, essentially, represent things done by individual nodes, which are relevant to the particular document being sought. Examples include visit URL, read article, purchase products, volunteer skill and so on. Information on actions is stored against each node of the PSN.

A search initiator may have a very large available PSN, in theory, out to order N. However, not all of that PSN may be useful for the search being carried out, and the search initiator is provided with means (such as a data entry field or a series of tick boxes) to restrict the search to a PSN of a user-selectable order. Typically the user may wish to restrict the search to a first, second or third order PSN.

A further option may be made available allowing the search initiator to exclude particular individuals or classes of individuals from that part of the PSN which is going to be used for the search. For example, the user may wish to exclude work-based contacts for a search which is being carried out in respect of a personal hobby.

Once the search initiator has specified the appropriate parameters, the system works through that individual's PSN, link by link, to construct the subset of the PSN that is going to be used in the search. This subset is then stored in memory as an "in-memory view". Storing information in memory ensures that that part of the PSN that is going to be used for searching does not need to be recreated if the user wishes to carry out additional searches using the same criteria.

Further details of the way in which the digraph of figure 1 is built up from a relational database, and traversed, will be described later.

The grouping of individuals making up the PSN, and the type of relations between them, is not of importance to the operation of the invention as a whole, but will depend upon the implementation and application. Typical PSNs might include individuals and their work contacts, groups of friends, groups of individuals with common interests or individuals conveniently grouped together for any other reason.

Typically (although not necessarily) each individual may choose his or her direct "buddies" (that is those individuals with which there will be a direct link) , with the second and higher order PSNs being generated by the system without direct involvement from the individual representing the root node. Alternatively, the entire PSN may be generated automatically, for example, by analysing things done by the individuals, without any individual needing to confirm explicitly whether another individual should or should not be added to the PSN.

If affinity ordering is to be carried out on the result items (see sections 3.7 and 4.12), the links or edges in the digraph need to be weighted. The weighting could be fixed (e.g. family members have a higher weighting than friends,) or it could be dynamic (for example on the basis of past actions affecting the relationship between connected individuals). Weightings could include such things as the time the linked individual has been known, the number of messages exchanged, the number of times a good recommendation has been received, and so on. To ensure that out of date information is not maintained within the database, the weighting could decay with time. Edge weights may be unidirectional or bi-directional. For the message used to weight the edges in the preferred embodiment, see section 4.12.

## 3. Apparatus

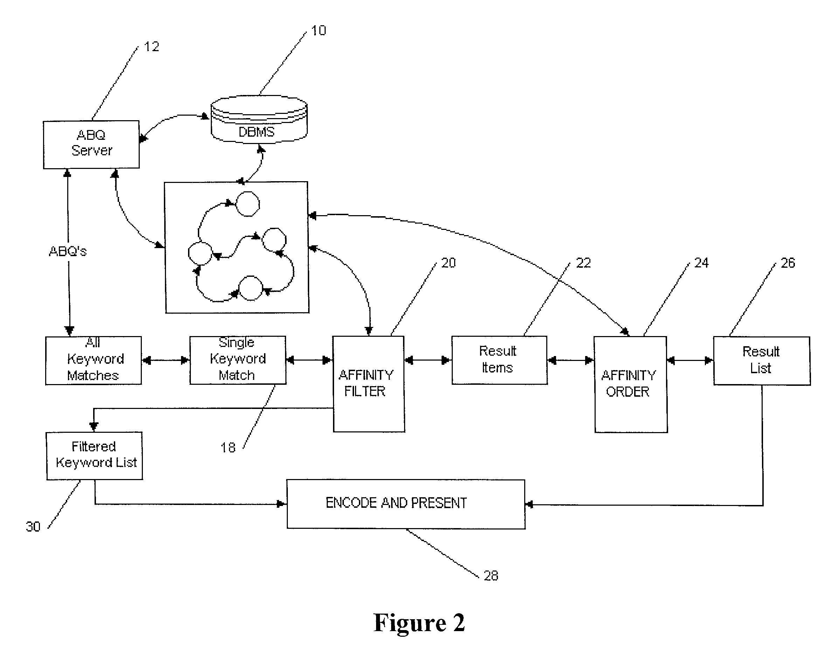

A schematic view of the apparatus used in the present embodiment is shown in figure 2. A DBMS 10 stored on an ABQ server 12 is used to generate an in-memory view 14 of the PSN. The in-memory view is used to generate an affinity filter 20 which filters the raw key word matches 16, 18 to provide a list of result items 22. On the basis of information taken from the in-memory view 14, the result items 22 are ordered in an affinity order 24 to create a result list 26. Affinity ordering may be by relation, rating or result action. Finally the result list is encoded and presented to the user at 28 along with, where appropriate, a copy of the filtered keyword list 30.

Further details of the preferred apparatus of the present invention will be described in the following subsections.

### 3.1 Persistent storage of relations, actions and metadata.

The system requires some form of repository- preferably in persistent form- for the storage of relations, actions and metadata (such as date information and so on). Either a Relational Database Management System (RDBMS) or Object Oriented Database Management System (OODBMS) can be employed. In the specific embodiment to be described, an RDBMS is used, and code samples are given in generic SQL (Structured Query Language).

In order for persistence of relations, actions and metadata to be realised in an RDBMS, normalisation of the data into database tables needs to be done. Simplistically speaking, the database must hold information on a number of PERSONS, the relations between PERSONS, and data on their actions (e.g. purchase products, rate products, store documents, write articles etc.).

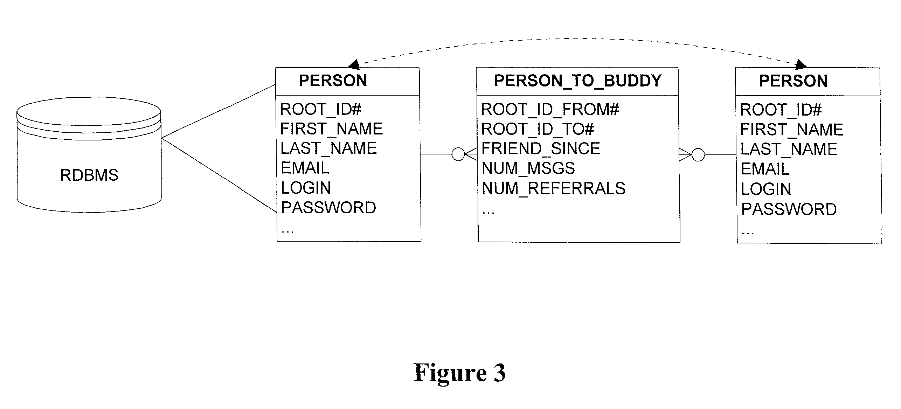

To that end, figure 3 illustrates the key PERSON and PERSON_TO_BUDDY tables. Keys within the table are indicated by the hash symbol.

In addition to information on individuals, the database also stores information on actions. (The exact nature of an action, and the information to be stored, will depend upon the application, but typically an "action" represents something that has been done by an individual, or statistics on a plurality of such events which may be of interest to the search initiator.)

For the purpose of illustration, we will describe an online bookstore example. However, it should be understood that the same principles apply whether actions are for an article rating, a URL search, for a skills match, etc. In each case, appropriate action and look up tables need to be added to the database in a similar manner to those described below. Such a task is within the capabilities of any database designer.

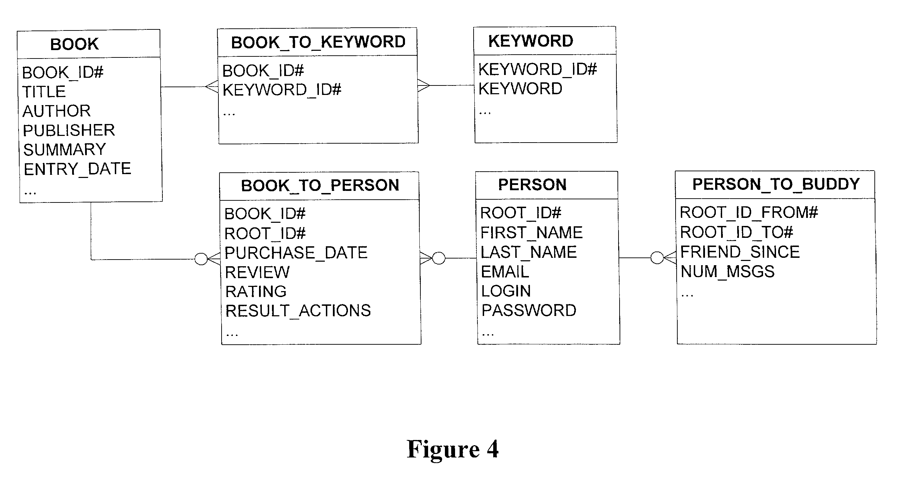

In an RDBMS, actions are stored within specific database tables such as those illustrated in figure 4. The actions here specifically relate to things being done by a person in relation to a specific book, such as purchasing it, reviewing it, rating it and so on. Metadata will typically be stored as well, for later retrieval, such as the date that the book was purchased, reviewed or rated.

### 3.2 Add/Modify/Delete Relations, Actions and Metadata

Once the basic schema has been defined in a database specific format, a mechanism to insert (add), update (modify) and delete relations, actions and metadata needs to be provided.

Because the bookstore example uses a relational database, SQL provides a process to achieve this requirement through INSERT, UPDATE and DELETE keywords. e.g. to create a relation from one buddy to another, the following SQL could be used:

```
INSERT INTO   PERSON_TO_BUDDY
              (ROOT_ID_FROM, ROOT_ID_TO, FRIEND_SINCE, NUM_MSGS, ...)
VALUES        (id, id2, DATE, 0, ...);
```

In the above, the elements id and id2 are provided as parameters.

### 3.3 Marshal In Memory Views

Bringing results to queries back from the database (i.e. as result items) requires an in-memory view of the PSN to be constructed in computer memory. This method is described in section 4.9. Suffice to say however that a working storage apparatus is needed for this process.

### 3.4 Publicly Volunteer Actions

Actions are classified by type and encoded in a client message header (or similar) from the client (search initiator) to the ABQ server. For example, ACTION_BUDDY_IM refers to a standard message from one buddy to another. ACTION_REFERRAL and ACTION_PURCHASE refer to a specific class of action.

Application specific action classifications can be derived according to the requirements of the implementation. In the bookstore example however, ACTION_PURCHASE_BOOK is used to distinguish this type of action from others, e.g. ACTION_REFERRAL_URL for a URL referral, ACTION_REFERRAL_DOC for a document referral or ACTION_REFERRAL_ARTICLE for an article referral etc. Action types are embedded in a message header and handled in an ABQ server process. Thus an appropriate apparatus for encoding messages needs to be in place.

Preferably a community of users needs to consent to publicly volunteering actions. This has obvious privacy issues and, as such, implementers of the system may define their own policies and implementation rules. However, assuming an 'open' approach to information sharing is adopted (without exposing sensitive details such as account details etc.), the ABQ framework needs to capture and store publicly volunteered information on community actions.

Actions are volunteered either 'directly' or 'indirectly'. For example, a 'referral' from one PERSON to another is an example of a direct action. In a referral (e.g. book, article, product, service, URL etc.), a PERSON sends a specific type of action message to a PERSON ('buddy'), which then gets encoded in the message header (e.g. ACTION_REFERRAL_BOOK).

An example of an indirect action is a rating. A rating is either applied to an artefact or document (e.g. a book, product, article etc.) or to a PERSON (e.g. rating proficiency in a skill etc.). That is to say, indirect actions are applied to information or a PERSON <u>without</u> being passed to another PERSON. These are also encoded in the action field of the header as ACTION_RATING_BOOK, ACTION_RATING_ARTICLE or ACTION_RATING_SKILL etc.

The derivation of action types is application specific, but the apparatus should typically classify actions by type and allow the community to volunteer actions publicly. Of course actions can be performed privately; however, the more that is shared, the more productive the system becomes on the whole.

### 3.5 An Apparatus to Create ABQ's

In compiling the result list, all actions need to pass through a central process (the ABQ server 12 in figure 1) in order for the system to act on them. Actions not involving any data storage or specific processing can simply be routed onto the PERSON recipient(s), e.g. ACTION_BUDDY_IM. However, other direct and indirect actions may require the system to respond. One example of this in the online bookstore system is the action of purchasing of a book (identified by the ACTION_PURCHASE_BOOK action type). This requires the system to make an association between the BOOK and PERSON. For example, following the server receiving and decoding this type of action, the following SQL would be executed, with book_id and root_id being provided as parameters:

```
INSERT INTO     BOOK_TO_PERSON
                (BOOK_ID, ROOT_ID, PURCHASE_DATE, ...)
VALUES          (book_id, root_id, DATE, ...);
```

Once an apparatus for sending, processing and storing data on actions is in place, further apparatus relating actions back to result items needs to be considered.

An apparatus to capture the initial search string (e.g. from a web form) is required. This can be a simple edit box on a web page with a server script to process the input. Information from client-side cookies (or similar) can extrapolate the search initiator's ROOT_ID and prepare the QUERY_STRING for the server CGI script. The server script will then parse the QUERY_STRING and construct a standard expression, transposed into SQL (in the RDBMS case).

Within the server scripts lie the rules for ABQ's as laid out in section 4, where details of the algorithms are contained. Suffice it to say at this stage that there should be:

- a server-based apparatus (database) to store information on persons, relations and actions;
- a server-based apparatus to process input keyword queries (e.g. CGI scripts) and;
- a process to present the result list of result items back to the initiator (e.g. CGI + DHTML).

### 3.6 Affinity Filtering of Result Items

Stored actions become result items once they are affinity 'filtered' and 'ordered'. Until then, they exist only in the database as actions. Once a keyword search has been composed by a search initiator, a standard database SELECT query (or similar) extracts a number of keyword matches from the action tables. For example, in our book system scenario, the search initiator could enter the word 'Bronte' as a search string. A simple keyword lookup in the database (using the BOOK, BOOK_TO_KEYWORD and KEYWORD action tables from our example) may then produce the following keyword matches:

- *Charlotte and Emily Bronte : The Complete Novels : Jane Eyre, Wuthering Heights, Shirley, Villette, the Professor -- Charlotte Bronte (Contributor), Emily Bronte; Hardcover*

- *Wuthering Heights (Oxford World's Classics) -- Emily Bronte, Patsy Stoneman (Editor); Paperback*
- *Wuthering Heights -- Emily Bronte; Paperback*

While providing valid keyword matches, this example has not has not yet taken into account any filtering with respect to 'affinities' in the PSN. Therefore, before the result items are ordered and presented back to the search initiator, keyword matches need to be filtered and then affinity ordered.

To achieve affinity filtering, the ROOT_ID of the search initiator needs to be provided (e.g. through cookies again) as does the 'distance' to search in the PSN (i.e. the ROOT_ORDER). If for example ROOT_ORDER = 3, the search initiator is prepared to extend the ABQ to a 'buddy of a buddy of a buddy' in their PSN.

Once the in memory view of the PSN has been constructed (see section 4.9), each of the keyword matches from the above list can be compared to each node in the in memory view. By extracting the ROOT_ID from each node in the PSN and repeatedly checking the return code from a SELECT query, a filtering of results matching PERSON's in the PSN to elements in the keyword match list can be made to produce filtered result items, e.g. (for each PSN in memory view node). In the following, book_id and root_id are provided as parameters:

```
SELECT      BOOK_ID
FROM        BOOK, BOOK_TO_PERSON, BOOK_REFERRAL
WHERE       BOOK.BOOK_ID=book_id
AND         BOOK.BOOK_ID=BOOK_TO_PERSON.BOOK_ID          // purchase action
AND         BOOK_TO_PERSON.ROOT_ID=root_id;
```

If the return code from this SELECT query indicates success, keyword matches can be categorised as being a filtered result item or; if the SELECT returns false, a filtered keyword match.

Filtered keyword matches can be ordered according to the matching rules applied by the default keyword ordering system, or whichever other system is employed.

From the book example, let us assume that the two 'Wuthering Height' books have been purchased by members in the search initiators PSN where ROOT_ORDER <= 3 from the search initiator. Then, following the affinity filtering process, the following lists are produced:

Filtered result items

- *Wuthering Heights (Oxford World's Classics) -- Emily Bronte, Patsy Stoneman (Editor); Paperback*
- *Wuthering Heights -- Emily Bronte; Paperback*

Filtered keyword matches

- *Charlotte and Emily Bronte : The Complete Novels : Jane Eyre, Wuthering Heights, Shirley, Villette, the Professor -- Charlotte Bronte (Contributor), Emily Bronte; Hardcover*

The next phase for the Filtered result items list is to affinity order them and form the result list.

**3.7 Affinity Ordering of Result Items**

Affinity ordering the result items depends on a user preference. Results can either be ordered by rating, relation or result action (see section 3.8). Rating ordering however, looks at the filtered result items and orders them according to the highest ratings applied by referees (see section 4.11), e.g.

Filtered and ordered result items (ordered by rating)

- *Katie, who knows Nick purchased Wuthering Heights (Oxford World's Classics) -- Emily Bronte, Patsy Stoneman (Editor); Paperback, rating it 4.5/5*
- *Nick purchased Wuthering Heights -- Emily Bronte; Paperback, rating it 3/5*

Relation ordering orders the filtered result items by the strength of a relation, i.e. the 'edge weight' between referee nodes in the PSN (see section 4.12).

Filtered and ordered result items (ordered by relation)

- *Nick purchased Wuthering Heights -- Emily Bronte; Paperback, rating it 3/5*
- *Katie, who knows Nick, purchased Wuthering Heights (Oxford World's Classics) -- Emily Bronte, Patsy Stoneman (Editor); Paperback, rating it 4.5/5.*

Result action ordering sorts the filtered result items according to how many result actions have been followed by the referee's past results (see sections 3.8 and 4.13 for more on result action ordering).
The now affinity 'filtered and ordered' result items are now referred to as the result list and can be encoded and presented back to the search initiator (see section 4.14).

## 3.8 Feeding Back Result Actions into the database.

Not all implementations of an ABQ system will necessarily include feedback. However, its usefulness is seen to be: (i) as another term by which to affinity order result items (see section 3.7) and; (ii) as a means of both rewarding and motivating a community to publicly volunteer actions (e.g. 'this week's most popular referee was **XXX'** etc.). Once the result list has been filtered, ordered, encoded and presented, and following a search initiator selecting a result action (i.e. following a result item), feedback can take place.
An apparatus for feeding back result actions into the database involves extracting the result identifier and referee identifier from the result item chosen by the search initiator. Once result and referee identifiers have been extracted, an SQL SELECT statement (or similar) can be formed to reward the referee by incrementing a reserved field in the database relating to the referee's node.
From figure 4, the BOOK_TO_PERSON table contains a RESULT_ACTIONS column: this is the reserved field used to count the number of result actions taken by search initiators of ABQ's.
For example, if the result action followed a result path in response to a buddy's action of purchasing a book, then the BOOK_TO_PERSON.RESULT_ACTIONS field would be updated following the result action, e.g.

```
UPDATE    BOOK_TO_PERSON
SET       BOOK_TO_PERSON.RESULT_ACTIONS=BOOK_TO_PERSON.RESULT ACTIONS+1
WHERE     BOOK_TO_PERSON.BOOK_ID=result_id
AND       BOOK_TO_PERSON.ROOT_ID=referee_id;
```

Where result_id and referee_id are provided as parameters.
Therefore, the ABQ apparatus should encode referee and result identifiers in the result list in order to reward a referee. Considering the bookstore system example, the result identifier is the BOOK_ID and the referee identifier is a ROOT_ID. The presentation of the results would contain elements (e.g. XML tags) identifying the result identifier (in this case, the BOOK_ID) and the referee identifier (e.g. the BOOK_TO_PERSON.ROOT_ID field) for each of the result items held in the result list, e.g.

```
<?xml version='1.0'?>

<!DOCTYPE ABQ SYSTEM "abq.dtd">
<results>
  <title>ABQ Results</title>
  <resultlist>
    <resultitem path="http://some.domain.com/books/bronte.html#wh">
      <resultaction>../cgi-bin/resultAction.pl</resultaction>
      <referee id="567321">Katie</referee> who knows
      <relation id="567274">Nick</relation> purchased
      <result id="984527">Wuthering Heights</result> rating it
      <rating>4.5</rating> out of 5
    </resultitem>
    ...
  </resultlist>
</results>
```

A result item path (in the book example) is an XML tagged URL pointing to a web page about the book, and a result action would be the search initiator clicking on one of the result paths. After which, SQL such as that in section 3.8 can be run once the required tags have been extracted from the result item.

Apparatus to encode referee and result identifiers in the result should be provided (XML tags are one solution). Additionally, apparatus to capture result paths taken by search initiators (e.g. parameter passing back a CGI QUERY STRING on the server from a web browser). Finally, apparatus to process the result path (from the result action) needs to update the NUM_REFERRALS fields for the referee and present the result endpoint to the search initiator (e.g. a CGI server script). The result endpoint is considered (in the book example) a web page describing the book. Other examples of result endpoints are: (i) product pages; (ii) articles; (iii) email addresses; (iv) newsgroup articles; or (v) URL's and documents etc.

### 4. Methods

The following sub-sections describe the methods required to build the example book ABQ system. Details such as user interface have been omitted, as have references to specific Internet browsers or other software etc.

While some of these specific details of the methods described relate particularly to the example book ABQ system, the underlying principles are generic and it is well within the capabilities of a skilled person in the field to modify the methods shown for use in other applications. In effect, all that is required to implement another system is to capture information about referees, results, actions and metadata in any convenient way, and to modify the methods described below to handle that information in an appropriate manner.

### 4.1 A method to create the ABQ database schema

The first step is to create a database. Standard ANSI SQL can achieve this (assuming an RDBMS is being used). Once this is done, the ABQ schema needs to be defined. This is best illustrated through code. The following SQL illustrates schema creation for the online bookstore system (see figure 4)

```
USE ABQ;                                                    // assumes DB = 'ABQ'
CREATE TABLE PERSON                                         // Person table
(
    ROOT_ID              INT UNSIGNED PRIMARY KEY,          // primary key
    FIRST_NAME           VARCHAR,
    LAST_NAME            VARCHAR,
    EMAIL                VARCHAR,
    ...                                                     // other fields
};
CREATE TABLE PERSON_TO_BUDDY                                // Buddy table
(
    ROOT_ID_FROM         INT UNSIGNED,                      // foreign key
    ROOT_ID_TO           INT UNSIGNED,                      // foreign key
    FRIEND_SINCE         DATE,
    NUM_MSGS             INT UNSIGNED,                      // used for ordering
    ...                                                     // other fields
};
CREATE TABLE BOOK                                           // Book table
(
    BOOK_ID              INT UNSIGNED PRIMARY KEY,          // primary key
    TITLE                VARCHAR,
    AUTHOR               VARCHAR,
    PUBLISHER            VARCHAR,
    SUMMARY              LONG VARCHAR,                      // summarised précis
    ENTRY_DATE           DATE,
    ...                                                     // other fields
};
CREATE TABLE BOOK_TO_KEYWORD                                // Book keyword table
(
    BOOK_ID              INT UNSIGNED,                      // foreign key
    KEYWORD_ID           INT UNSIGNED,                      // foreign key (hash)
    ...                                                     // other fields
};
CREATE TABLE KEYWORD                                        // Keyword table
(
    KEYWORD_ID           INT UNSIGNED PRIMARY KEY,          // primary key (hash)
    KEYWORD              VARCHAR,
    ...                                                     // other fields
};
CREATE TABLE BOOK_TO_PERSON                                 // An 'action' table
(
    BOOK_ID              INT UNSIGNED,                      // foreign key
    ROOT_ID              INT UNSIGNED,                      // foreign key
    PURCHASE_DATE        DATE,
    REVIEW               LONG VARCHAR,                      // used for reviewing
    RATING               INT UNSIGNED,                      // used for filtering
    RESULT_ACTIONS       INT UNSIGNED,                      // used to reward
                                                            results
    ...                                                     // other fields
};
```

**4.2 A method to store referees (PERSON's) in a database**

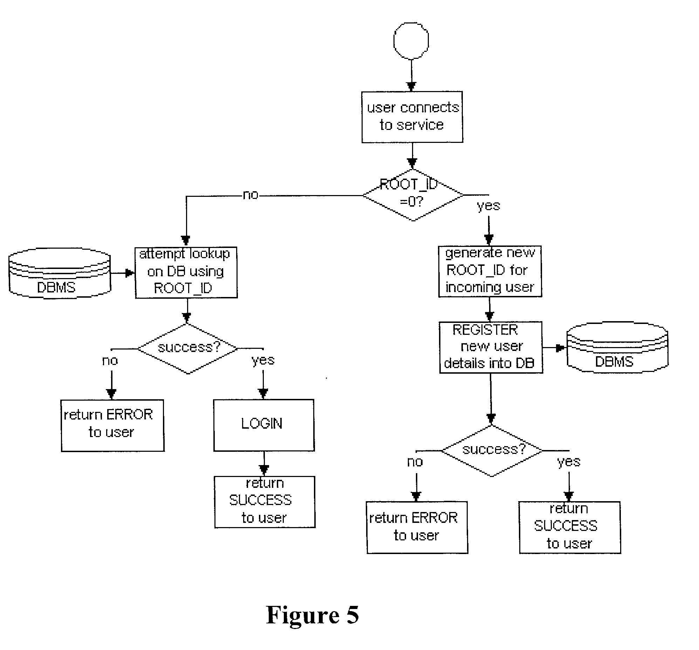

Once the database and schema is constructed, the system waits for PERSON 'registrations' and 'logins',(see figure 5) This may be realised through an Instant Messaging client interface or extrapolated from information known to hold information on a Personal Social Network - e.g. through scanning closed community email address books - or through a more open online community (e.g. a newsgroup) where actions between PERSON's can be intercepted and processed by the ABQ server.

In the bookstore system example, an Instant Messaging client could be used to accompany the ABQ service and provide the raw relation data for the PSN.

The IM system works in conjunction with an Internet browser to monitor actions and act on them. Therefore, the following process outlines joint REGISTRATION and LOGIN methods, adding user details into the PERSON table in the database in the case of new registrations. For clarity, exception, primary key and handling processes etc. are omitted from figure 5.

### 4.3 A method to modify PERSON records

Should a PERSON wish to alter their details (e.g. their email address), a method allowing them to do so must be in place. This can be realised for example through the following SQL.

```
UPDATE    PERSON
SET       PERSON.EMAIL=email
WHERE     PERSON.ROOT_ID=root_id;
```

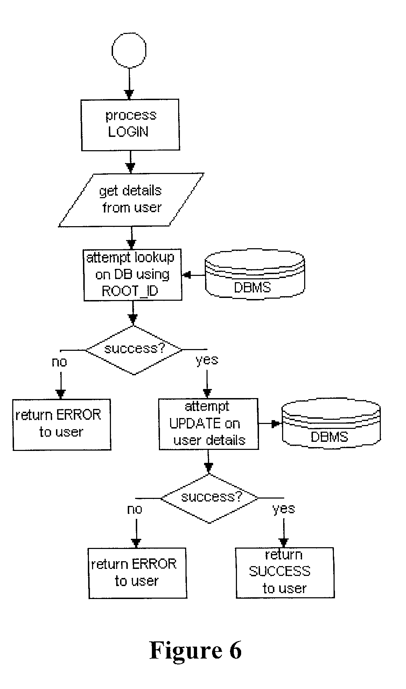

Figure 6 shows the process in flow chart form.
This assumes that the user has already registered with the ABQ service and has been allocated a unique ROOT_id. There after, the user is logged in and is known to the system (see section 4.2).

### 4.4 A method to delete PERSON records

Should a PERSON wish to delete their details completely, a method allowing them to do so must be in place. This can be realised for example through the following SQL.

```
DELETE FROM    PERSON
WHERE          PERSON.ROOT_ID=root_id;
```

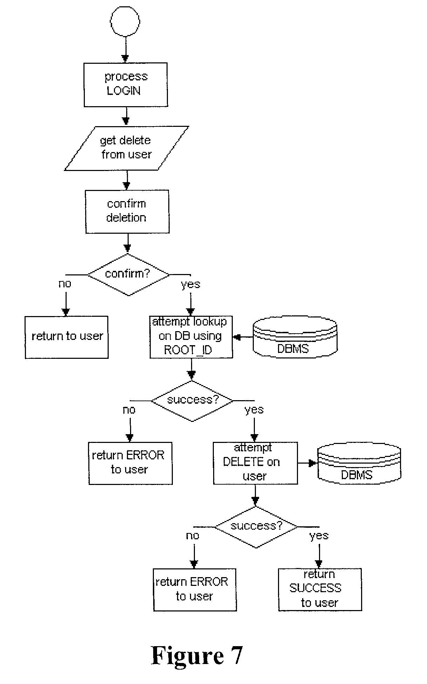

Figure 7 shows the process in flow chart form. As with figure 6, this assumes that the user has already registered.

### 4.5 A method to store relations between PERSON's

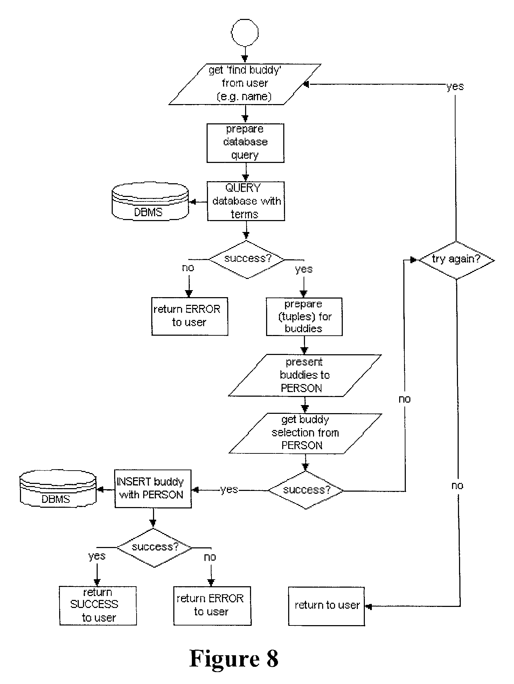

Following a process of 'find buddy' (i.e. a method allowing users to input values to search the database for buddies), a selected buddy is inserted to the PERSON_TO_BUDDY table using SQL (e.g. see listing under section 3.2).
The process is shown in flow chart form in figure 8. At box 80, a number of different terms may be used to find buddies. In its simplest form the PERSON may know the ROOT_id of the buddy they wish to add. In a more complex example, the PERSON may know only the surname, or some other partial details.
For clarity, no reference has been made here to other tables which might be present in a practical example. These could include a PERSON_TO_IGNORE table which has similar properties to the PERSON_TO_BUDDY table and which provides a mean of ignoring actions from unwanted individuals within a community.

### 4.6 A method to delete relations

As well as adding buddies into a buddy list (or similar), a PERSON may want to remove a buddy from a buddy list. This could be done with the following SQL:

```
DELETE FROM    PERSON_TO_BUDDY
    WHERE          PERSON_TO_BUDDY.ROOT_ID_FROM=root_id_from
    AND            PERSON_TO_BUDDY.ROOT_ID_TO=root_id_to;
```

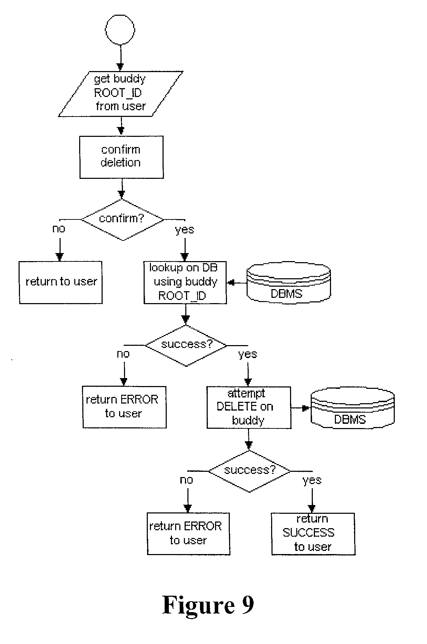

Figure 9 shows the process in a flow chart form.

### 4.7 A method to summarise and store actions

Actions from PERSON's are preferably summarised. This is so that keywords from the actions can be extracted and stored in a keyword table (for keyword matching). Summaries are stored along with action records, as are other data/metadata pertaining to the action.
The specifics of action summarisation are not part of the invention and various options are available. Summaries and keywords can be verbally agreed, provided (e.g. by a publisher in the example bookstore system) or extracted automatically (e.g. from a content or document summariser).
Following an action, a summarised version of the action is stored along with the data, metadata and keywords about it.

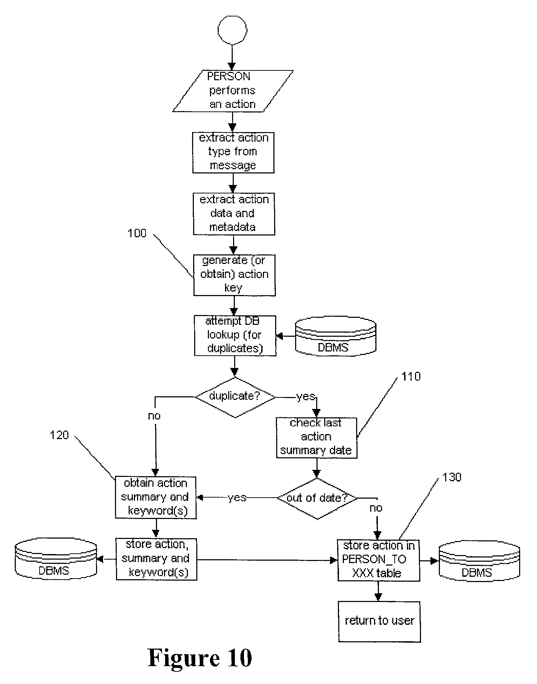

Figure 10 illustrates the method in flow chart form.
At box 100, an action key is generated or obtained. Keys can be generated in a number of ways (for example by the use of hash values): any convenient approach can be used. At box 110, there is a check made of the last action summary date. This process allows for already-summarised actions to be re-summarised if they are out of date. This may be particularly necessary for volatile data, for example on the web. Box 120 illustrates obtaining the action summary and key words: this may either be provided manually or, preferably, through an automated content summariser that reads documents or texts and that provides summaries and key words. With particular reference to the bookstore system, at box 130 the action would be stored in the BOOK_TO_PERSON or the BOOK_REFERRAL tables.

### 4.8 A method to process incoming ABQ parameters

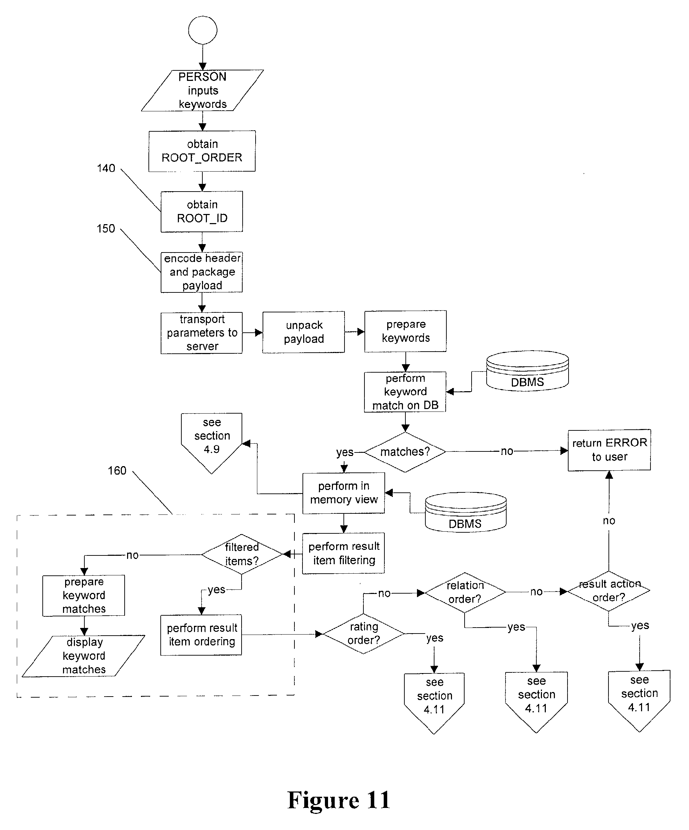

A generic approach to the processing of incoming ABQ parameters is shown in figure 11. At box 140, the ROOT_ID is obtained; this may be through the use of cookies (if a web browser is in use), or obtained from a registry setting, or from elsewhere. The encoding step shown at box 150 may use a bespoke TCP/UDP application header, or may encode the values in a QUERY_STRING. Further details of the items shown within the dotted line 160 may be found at section 4.10.

### 4.9 A method to build in memory views

In memory views require building the PSN digraph in computer memory. To do this, relations from the database need to be built with a number of abstract data types. There are numerous ways to do this and the following is but one example using a 'list of lists' (modelling a digraph).

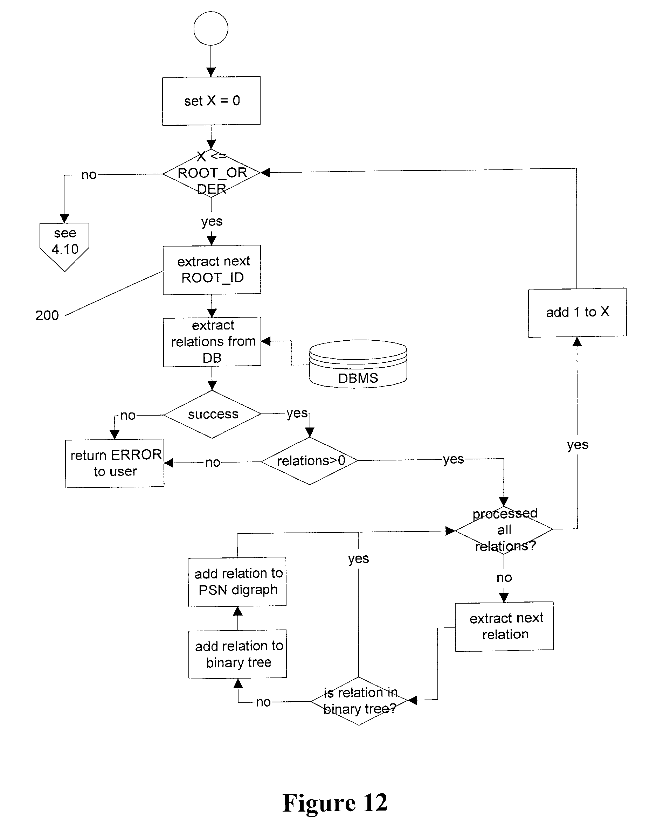

However, the principle and methods of the flowchart (figure 12) remains the same irrespective of whichever implementation method of holding the in memory view is chosen.

At box 200 of figure 12, the next ROOT_ID is extracted. This is the ROOT_ID of the next node in the PSN to look up in the database. In the first loop it is the ROOT_ID of the service initiator.

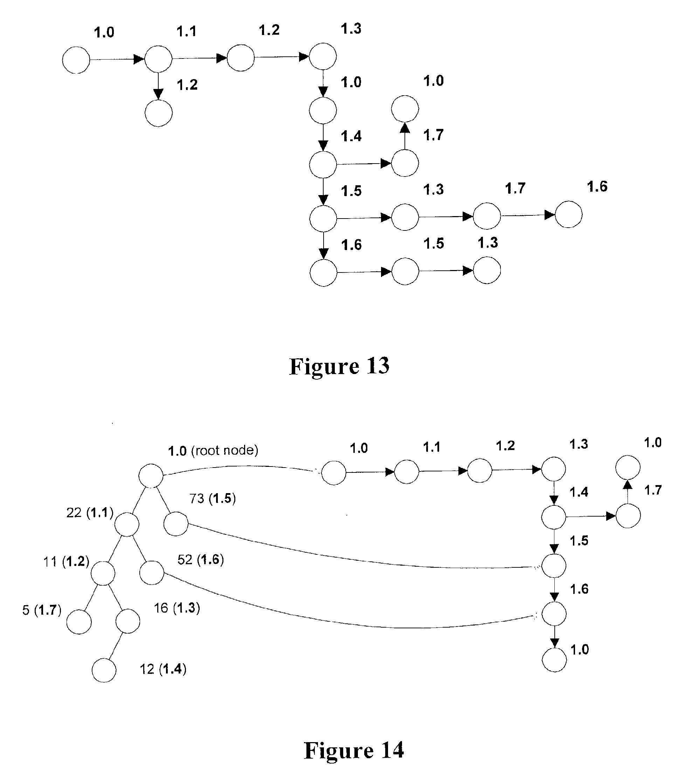

Figure 13 below shows how by iteratively extracting PERSON 'buddies' from the database leads to the production of an in memory view of the PSN digraph (binary tree description follows later).

Nodes are internally represented by 'objects' and edges encapsulate pointers or object references into other objects. By implementing the digraph using a doubly linked list (for example), a path back to the root node from any other node in the digraph can be traced. This is used to determine the PSN relations (e.g. 'Kate, who knows Nick...' etc.)

Nodes are placed in the graph in sequential order as read from tuples returned from a SELECT query. Each level of indirection in the graph relates to another ROOT_ORDER from the root node (i.e. 'ME'). This structure is built in computer memory from repeated SELECT queries iterating out from the root node. Nodes appear in a number of places due to the nature of the PSN.

Of course, tracing directly into the digraph (and avoiding duplicates) requires another process. This can be implemented through the use of a binary tree (using ROOT_ID's of each PERSON as the tree node value). A fast method of getting into the digraph can be achieved by holding pointers to digraph objects inside a binary tree, as shown in figure 14.

In figure 14, the numbers before the names in the binary tree indicate ROOT_ID values from the database.

The use of the binary tree allows objects to enter the digraph once only. That is to say, relations retrieved from the database are first checked if they appear in the binary tree. If so, they are discarded (as a 'shortest path' to them has already been computed — apart from reference to the root node). If not, they are added to the digraph and their pointer is added into the corresponding ROOT_ID node location in the binary tree for fast access into the digraph.

### 4.10 A method to affinity filter ABQ keyword matches

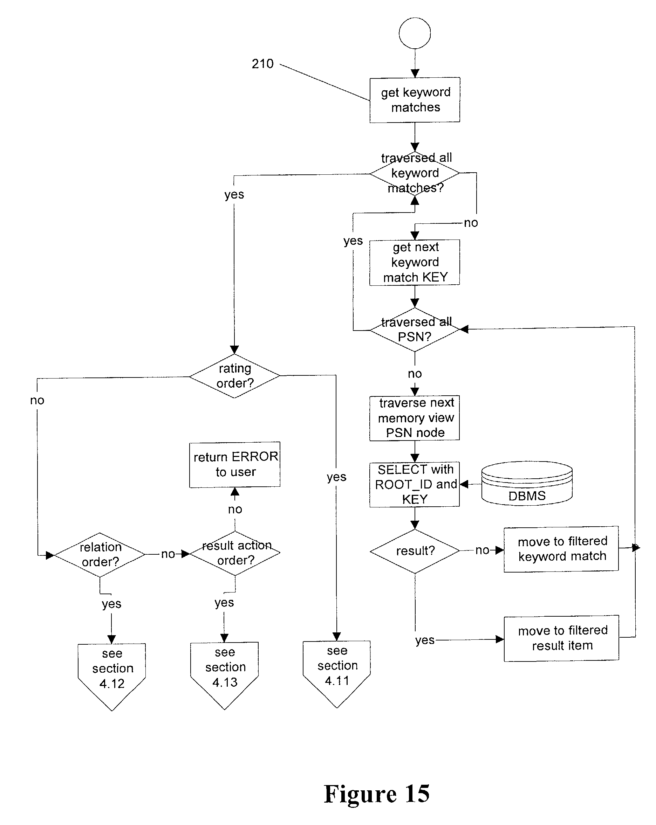

Once the in memory view is built, the next phase is to filter the keyword matches into filtered result items and filtered keyword matches (see section 3.6). The process is shown in figure 15.

At box 210, we can see obtain keyword matches. This of course assumes that we have managed to find keyword matches to the search initiator's ABQ keyword list-see section 4.8.

Following this process, keyword matches have been processed into two lists: (i) filtered keyword matches (ordered by keyword) and (ii) filtered result items (also ordered by keyword). The next phase is to affinity order the filtered result items.

### 4.11 A method to affinity order result items by rating

Now that we have filtered the results into filtered keyword matches (no longer considered until encoding and presentation) and filtered result items, we need to order them.

Ordering by rating involves sorting the filtered result items according to ratings applied by PERSON's in the PSN. Although filtering and ordering can be seen as two separate tasks, to reduce the number of database accesses, the in memory view can be prepared according to the method of ordering selected by the search initiator during filtering. For example, if the search initiator chose to order by rating, then whilst filtering the results (section 4.10), the database query could extract information on ratings applied at the same time as filtering, as in the following SQL:

```
SELECT    BOOK_ID, BOOK_TO_PERSON.RATING
FROM      BOOK, BOOK_TO_PERSON
WHERE     BOOK.BOOK_ID=book_id
AND       BOOK.BOOK_ID=BOOK_TO_PERSON.BOOK_ID
AND       BOOK_TO_PERSON.ROOT_ID=root_id;
```

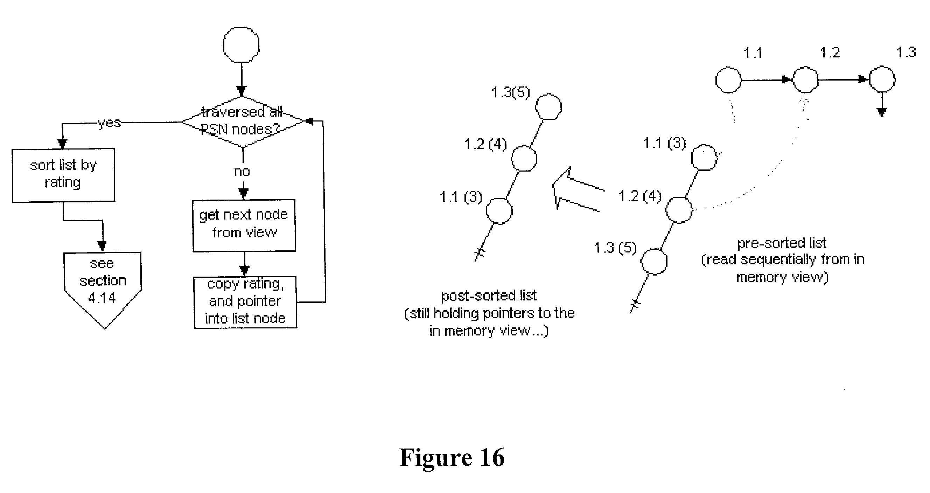

Combining the filtering method with collecting information useful for ordering the result list can drastically speed up performance during the ordering phase. This is because one database read per PSN referee for filtering places 'ordering' information into the in memory view allowing traversal of memory to take place rather than repeated calls (and locks) to the database.
Considering that we already have the rating information in the in memory view, we can proceed rating order as shown in figure 16.
The ordered linked list in figure 16 is now in effect a linear version of the in memory view, ordered by PERSON's who have rated a result item. Thus, looping through each result item and repeatedly sorting the ordered linked list (according to each result item) and copying the results into another list produces a filtered and ordered list of result items. This list may contain duplicate references to a result item (where more than one person has rated a result item).
It will be understood of course that the sorting may be carried out using any convenient method, including quicksort, bubblesort, mergesort, insertsort, and so on.

**4.12 A method to affinity order result items by relation**

As mentioned in section 4.9, each node of the in memory view holds the ROOT_ID of a PERSON so that filtering and ordering of keyword matches can take place.
The other attribute held in the digraph - for relation ordering only - is the reciprocal edge weighting (Ew) value between PERSON's.
Ew can be computed in a number of ways and derived according to the application. However, the following method is sufficient for many needs and uses derivatives of action and time in its calculation. The first part of computing Ew between two PERSON's (A→B) is to calculate the total number of actions sent from A to all buddies (where ROOT_ORDER = 1) and is given as:

$$A = \sum_{i=1}^{j} a_i \qquad\qquad \text{(eq. 4.1)}$$

where:   a = the number of actions <u>sent from</u> A to the $i^{th}$ buddy, where A's root order=1
The next calculation is the number of actions received by A from all buddies and is given as:

$$B = \sum_{i=1}^{j} b_i \qquad\qquad \text{(eq. 4.2)}$$

where:   b = the number of actions <u>received by</u> A from the $i^{th}$ buddy, where A's root order=1
Next comes calculating Mt. Mt represents the maximum time anyone has been a buddy of A and is used in calculating Aw and Bw (below). Aw represents the edge weight <u>from</u> A to B and is given as:

$$Aw = \frac{a/A}{Bt/Mt} \qquad\qquad \text{(eq. 4.3)}$$

where:

a = the number of actions sent <u>from</u> A to B

A = the sum of all actions sent <u>from</u> A to all buddies, given in (eq. 4.1)
Bt = the time in which B has been a buddy of A
      and
Mt = the maximum time anyone has been a buddy of A

Bw represents the edge weight <u>to</u> A from B and is given by

$$Bw = \frac{b/B}{Bt/Mt} \qquad \text{(eq. 44)}$$

where:

b = the number of actions sent <u>to</u> A from B
B = the sum of all actions sent <u>to</u> A from all buddies, given in (eq. 4.2)
Bt = the time in which B has been a buddy of A
      and
Mt = the maximum time anyone has been a buddy of A

Finally, sum all Aw and Bw values for all buddies and compute Ew between A→B as follows:

$$Ew_{AB} = \frac{Aw + Bw}{\sum_{i=0}^{j} Aw_i + \sum_{i=0}^{j} Bw_i} \qquad \text{(eq. 4.5)}$$

Completing equation 4.5 for all buddies will produce a normalised array such that:

$$\sum_{m=1}^{n} Ew_m = 1 \qquad \text{(eq. 4.6)}$$

As an example, consider the following table showing the Ew values from A→$B_1$ .. $B_5$:

| | A | B | C | D | E | F | G |
|---|---|---|---|---|---|---|---|
| 1 | From A to | Bt | a | Aw# | b | Bw# | Ew# |
| 2 | $B_1$ | 10 | 10 | 0.438 | 5 | 0.259 | 0.131 |
| 3 | $B_2$ | 5 | 10 | 0.875 | 10 | 1.037 | 0.360 |
| 4 | $B_3$ | 2 | 5 | 1.094 | 3 | 0.778 | 0.352 |
| 5 | $B_4$ | 8 | 5 | 0.273 | 6 | 0.389 | 0.125 |
| 6 | $B_5$ | 14 | 2 | 0.063 | 3 | 0.111 | 0.033 |
| 7 | | | | | | | 1.000 |
| 8 | | | | | | | |
| 9 | note. '#' indicates a calculated property | | | | | A# | 32 |
| 10 | ...the rest are stored in the DBMS... | | | | | B# | 27 |
| 11 | | | | | | Mt# | 14 |

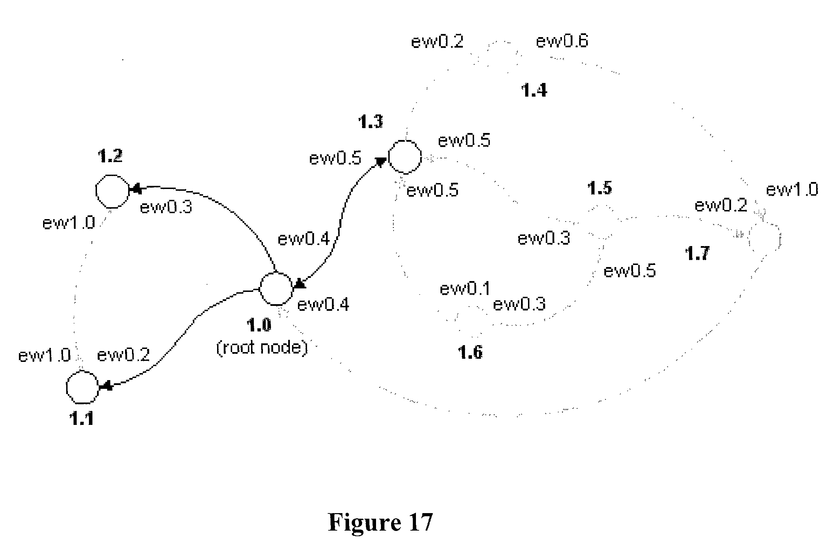

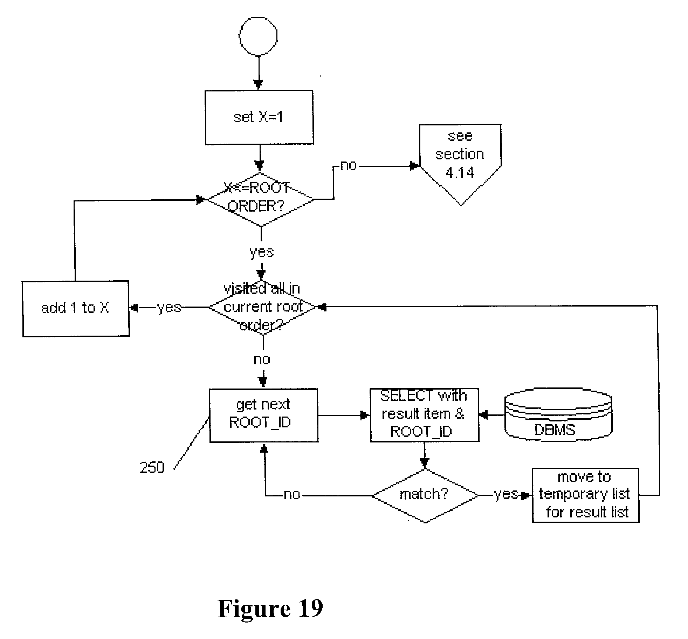

Thus, by traversing the in memory view and calculating Ew values for each node, we can begin to build a picture of the PSN that (in our example) could resemble figure 17.
Once all Ew values have been calculated for the in memory view a process of sorting the relationships by root order and Ew value can produce the arrangement of figure 17. Once the in memory view is ordered, it is simply a matter for the algorithm to inspect each filtered result item and traverse the (ordered) in memory view as shown in figure 19.
In that figure, box 250 requires us to obtain the next ROOT_ID: this is the ROOT_ID of the next node in the memory view according to the current root order ("X" value). So, where X equals 1 the ROOT_ID order will be 1.1, 1.2, 1.3 (from figure 1),...etc.

**4.13 A method to affinity order result items by result action**

This method works in a similar manner to that presented in section 4.11. The in memory view does not require ordering (as in section 4.12) as ordering is done according to how 'valuable' PERSON's in the PSN are seen. Result actions (from section 3.8) are an incremental value and get updated after result actions have been taken by search initiators (section 4.15).

However, assuming the RESULT_ACTIONS field is modelled in the action tables of the database (see listing at section 4.1), affinity ordering the filtered result items by result action takes place in an identical fashion to that in section 4.11 with the exception that the final list is ordered on result action and not rating.

**4.14 A method to encode and present result items**

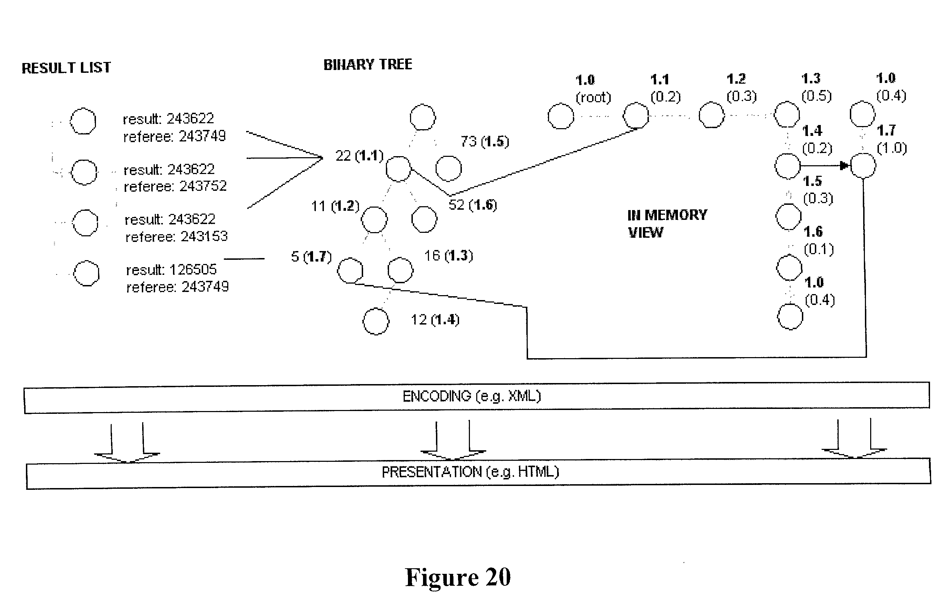

Once the filtered and ordered result items have been compiled, the penultimate phase involves encoding and presenting the result list back to the search initiator. An apparatus for this was presented in section 3.8. In this section, an example using XML was presented. However, the specifics of encoding are left open to the ABQ application developer. Suffice to say, the format of the (pre-encoded) result list will hold information on referee, result, relation and (where appropriate) rating. These may be fields within a software class held in an abstract data type such as a linked list. The result list is then used in conjunction with the binary tree and the in memory view to look up affinities with result items. These are then pushed through an encoding and presentation process and presented back to the search initiator. This is shown in figure 20. Note that the result list holds the result identifier, the binary tree the root identifier and the in-memory view other data (for example edge weights) and relational data with respect the root node.

**4.15 A method to feedback result actions**

As mentioned in section 3.8, a process to feedback results action made by search initiators is the final method to explain. This method assumes an apparatus tracking which result item the search initiator has selected can feedback values to the ABQ server (figure 2).

In the bookstore example, this apparatus is a hyperlink calling an ABQ 'resultAction' server script with the following three parameters:

- RESULT_PATH — the URL of a web page describing the product (book)
- REFEREE_ID — the referee identifier (see section 3.8 and listing at section 3.6)
- RESULT_ID — the result identifier the product (book).

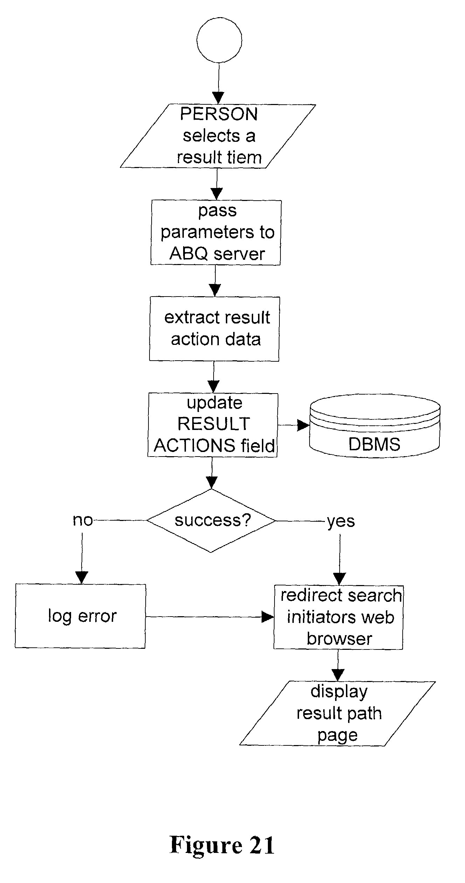

This is shown in figure 21.

Once the result action have been sent back into the database, the ABQ process is complete, and the system then simply waits for the search initiator, or indeed any other members of the on line community, to start another search.

In a variant of the preferred embodiment (not shown) the system could allow the output to be ordered by more than one parameter. For instance, the output could first be ordered by relation, and then, within that, by rating. Options may be provided to allow the search initiator various possibilities.

**Glossary of Terms**

| | |
|---|---|
| **ABQ** | Affinity Based Query |
| **Action** | An activity performed by a member of a virtual or online community (e.g. visit URL, purchase book etc.). Actions can be direct, indirect, public and/or private |
| **Affinity** | The process of qualifying keyword matches against members of a |
| **Filtering** | Personal Social Network (PSN). |
| **Affinity** | The process of ordering affinity filtered result items with respect to |
| **Ordering** | rating, relation or result action |

| | |
|---|---|
| **Digraph** | Directed Graph. A way of presenting the Personal Social Network using nodes and directed edges. |
| **Edge Weight** | A relationship weighting between members of a Personal Social Network |
| **In Memory** | A computer memory model of the Personal Social Network held as a |
| **View** | collection of objects in an Abstract Data Type, examples are hash tables, linked lists and arrays etc. |
| **Keyword** | A matching between an entry in the ABQ database and a search |
| **Match** | initiators keywords. Keyword matches are pre affinity filtering and ordering |
| **Metadata** | Data about data. Stored data about actions not directly concerned with the action itself (e.g. the date the action was made etc.) |
| **PSN** | Personal Social Network. A way of describing relationships with respect to a root node |
| **Rating** | Part of a result item. A grade given either to information or to oneself |
| **Referee** | Part of a result item. A person within a Personal Social Network who is associated with information being sought by a search initiator. |
| **Relation** | Part of a result item. The method of describing the relationships between a search initiator and a result. |
| **Result** | Part of a result item. A matching of an action with a referee in an ABQ |
| **Result Action** | The activity taken by the search initiator following the presentation of the result list, e.g. following a hyperlink or emailing a relation etc. |
| **Result Item** | Part of a result list. An affinity filtered keyword matched action from the ABQ database |
| **Result List** | The product of keyword matches after they have been affinity filtered and ordered |
| **Result Path** | The location of a result, e.g. URL, directory path etc. |
| **Root Node** | The nucleus of a Personal Social Network. |
| **Root Order** | A way of describing 'distances' from a root node in a Personal Social Network to other members, i.e. 1$^{st}$ order relationships = 1 root order from the root node etc. |
| **Search Initiator** | An ABQ community user initiating a query. |

**Claims**

1. A computer query method comprising receiving a query from a search initiator, carrying out a search for information on the basis of the query and filtering the search results according to the affinity of each result with individuals within a linked network of individuals associated with the search initiator.

2. A computer query system as claimed in claim 1 in which the linked network of individuals is a personal social network.

3. A computer query system as claimed in claim 1 or claim 2 including the step of presenting the filtered results as a list.

4. A computer query system as claimed in claim 3 in which the hit is sorted according to the affinity of each result with individuals within the network.

5. A computer query system as claimed in any of the preceding claims including displaying each filtered search result in conjunction with information identifying the individual within the network that has an affinity with the result.

6. A computer query system as claimed in claim 5 further including displaying in conjunction with each filtered search result information identifying the type of affinity between the individual and the search result.

7. A computer query system as claimed in claim 6 in which the affinity consists of a rating applied by the individual to the result.

8. A computer query system as claimed in claim 5 further displaying in conjunction with each filtered search result information representative of a relation between the search initiator and the individual.

9. A computer query system as claimed in claim 4 in which the list is sorted according to ratings applied to the results by individuals within the network.

10. A computer query system as claimed in claim 4 in which the list is sorted according to a type or closeness of relation between the search initiator and the individuals which are associated with the filtered results.

11. A computer query system as claimed in claim 10 in which the list is sorted so that the first order relations appear before second order relations.

12. A computer query system as claimed in claim 10 in which the network includes weights associated with person to person links, the list being sorted in dependence upon the weights.

13. A computer query system as claimed in claim 12 in which the weights are time dependent.

14. A computer query system as claimed in claim 13 in which the weights are determined based on prior interactions between individuals within the network.

15. A computer query system as claimed in any one of the preceding claims including maintaining a database representative of the network of individuals.

16. A computer query system as claimed in claim 15 including constructing an in-memory view of a relevant part of the network, and filtering the search results according to information contained within the in-memory view.

17. A computer query system as claimed in claim 15 or claim 16 including maintaining within the database information on actions associated with or done by the individuals within the network.

18. A computer query system as claimed in claim 17 including maintaining information on a referral from one individual within the network to another.

19. A computer query system as claimed in claim 17 or claim 18 including maintaining information or messages between one individual within the network and another.

20. A computer query system as claimed in any one of claims 17 to 19 including maintaining information on the purchase of an item by an individual within the network.

21. A computer query system as claimed in any one of claims 17 to 20 including maintaining information on a rating by an individual of a document, a link or a product.

22. A computer query system as claimed in any one of claims 17 to 21 including maintaining information on a rating by an individual of another, or the same, individual within the network.

23. A computer query system as claimed in any one of the preceding claims in which the search is a keyword search.

24. A computer query system as claimed in any one of the preceding claims in which the search initiator selects the extent of filtering required by varying a minimum level of affinity which will return a result.

**25.** A computer query system as claimed in claim 15 including the step of selecting and carrying out a result action on one of the filtered results, and storing in the database information representative of the result action against the individual who was associated with the selected result.

**26.** A computer query system as claimed in claim 25 in which the said information stored against the individual comprises an action value.

**27.** A computer query system as claimed in claim 26 when dependent upon claim 3 in which the list is sorted according to the action values of the individuals associated with the filtered results.

**28.** A computer query system as claimed in claim 3 in which the search is a keyword search and in which the list is further sorted by keyword.

**29.** A computer program for carrying out a method as claimed in any one of the preceding claims.

**30.** A data-carrier carrying a computer program as claimed in claim 29.

**31.** A computer query system comprising means for receiving a query from a search initiator, means for carrying out a search for information on the basis of the query, and means for filtering the search results according to the affinity of each result with individuals within a linked network of individuals associated with the search initiator.

**Figure 1**

EP 1 288 795 A1

**Figure 2**

| PERSON | PERSON_TO_BUDDY | PERSON |
|---|---|---|
| ROOT_ID# | ROOT_ID_FROM# | ROOT_ID# |
| FIRST_NAME | ROOT_ID_TO# | FIRST_NAME |
| LAST_NAME | FRIEND_SINCE | LAST_NAME |
| EMAIL | NUM_MSGS | EMAIL |
| LOGIN | NUM_REFERRALS | LOGIN |
| PASSWORD | ... | PASSWORD |
| ... | | ... |

RDBMS

**Figure 3**

| BOOK |
| --- |
| BOOK_ID# |
| TITLE |
| AUTHOR |
| PUBLISHER |
| SUMMARY |
| ENTRY_DATE |
| ... |

| BOOK_TO_KEYWORD |
| --- |
| BOOK_ID# |
| KEYWORD_ID# |
| ... |

| KEYWORD |
| --- |
| KEYWORD_ID# |
| KEYWORD |
| ... |

| BOOK_TO_PERSON |
| --- |
| BOOK_ID# |
| ROOT_ID# |
| PURCHASE_DATE |
| REVIEW |
| RATING |
| RESULT_ACTIONS |
| ... |

| PERSON |
| --- |
| ROOT_ID# |
| FIRST_NAME |
| LAST_NAME |
| EMAIL |
| LOGIN |
| PASSWORD |
| ... |

| PERSON_TO_BUDDY |
| --- |
| ROOT_ID_FROM# |
| ROOT_ID_TO# |
| FRIEND_SINCE |
| NUM_MSGS |
| ... |

**Figure 4**

**Figure 5**

EP 1 288 795 A1

**Figure 6**

**Figure 7**

**Figure 8**

**Figure 9**

EP 1 288 795 A1

PERSON
performs
an action

extract action
type from
message

extract action
data and
metadata

100

generate (or
obtain) action
key

attempt DB
lookup (for
duplicates)

DBMS

110

duplicate?     yes

no

check last
action
summary date

120

out of date?     yes

no

130

obtain action
summary and
keyword(s)

DBMS

store action,
summary and
keyword(s)

store action in
PERSON_TO
XXX table

DBMS

return to user

**Figure 10**

**Figure 11**

**Figure 12**

**Figure 13**

**Figure 14**

210

get keyword
matches

traversed all
keyword
matches?

yes

no

yes

get next
keyword
match KEY

rating
order?

no

traversed all
PSN?

no

traverse next
memory view
PSN node

return ERROR
to user

yes

SELECT with
ROOT_ID and
KEY

DBMS

no

relation
order?

no

result action
order?

result?

no

move to filtered
keyword match

yes

yes

yes

move to filtered
result item

see
section
4.12

see
section
4.13

see
section
4.11

**Figure 15**

1.1 1.2 1.3

pre-sorted list
(read sequentially from in memory view)

1.1 (3)
1.2 (4)
1.3 (5)

1.3(5)
1.2 (4)
1.1 (3)

post-sorted list
(still holding pointers to the in memory view…)

**Figure 16**

traversed all RSN nodes?

no

get next node from view

copy rating, and pointer into list node

yes

sort list by rating

see section 4.14

**Figure 17**

EP 1 288 795 A1

**1.0**  **1.1** (0.2)  **1.2** (0.3)  **1.3** (0.5)  **1.0** (0.4)

**1.4** (0.2)  **1.7** (1.0)

**1.5** (0.3)

**1.6** (0.1)

**1.0** (0.4)

ordered

**1.0**  **1.3** (0.5)  **1.2** (0.3)  **1.1** (0.2)

**1.0** (0.4)  James (1.0)

**1.4** (0.3)  **1.0** (0.4)

**1.3** (0.3)  **1.7** (1.0)

**1.6** (0.1)

**Figure 18**

**Figure 19**

Figure 20

EP 1 288 795 A1

**Figure 21**

**European Patent Office**

## EUROPEAN SEARCH REPORT

Application Number

EP 01 30 7210

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | KAUTZ H ET AL: "The hidden web" AI MAGAZINE, SUMMER 1997, AMERICAN ASSOC. ARTIFICIAL INTELLIGENCE, USA, vol. 18, no. 2, pages 27-36, XP002202174 ISSN: 0738-4602 * abstract * * page 28, right-hand column, line 47 - page 29, left-hand column, line 14 * * page 31, right-hand column, line 4 - page 32, left-hand column, line 52 * * page 32, right-hand column, line 48 - page 33, left-hand column, line 3 * | 1-23, 28-31 | G06F17/30 |
| Y | WO 00 04474 A (NET PERCEPTIONS INC) 27 January 2000 (2000-01-27) * abstract * * page 7, line 28 - page 9, line 15 * * page 10, line 1 - page 10, line 15 * * page 17, line 2 - page 17, line 23 * * page 25, line 8 - page 25, line 29 * | 1-23, 28-31 | |
| A | KUMAR R ET AL: "Recommendation systems: a probabilistic analysis" FOUNDATIONS OF COMPUTER SCIENCE, 1998. PROCEEDINGS. 39TH ANNUAL SYMPOSIUM ON PALO ALTO, CA, USA 8-11 NOV. 1998, LOS ALAMITOS, CA, USA,IEEE COMPUT. SOC, US, 8 November 1998 (1998-11-08), pages 664-673, XP010318861 ISBN: 0-8186-9172-7 * page 664, left-hand column, line 18 - page 664, right-hand column, line 34 * * page 665, left-hand column, line 16 - page 665, left-hand column, line 50 * * page 666, right-hand column, line 11 - page 666, right-hand column, line 40 * | 1-31 | TECHNICAL FIELDS SEARCHED (Int.Cl.7) G06F |

-/--

The present search report has been drawn up for all claims

| Place of search | Date of completion of the search | Examiner |
|---|---|---|
| THE HAGUE | 13 June 2002 | Boyadzhiev, Y |

**European Patent Office**

## EUROPEAN SEARCH REPORT

Application Number

EP 01 30 7210

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 751 471 A (MASSACHUSETTS INST TECHNOLOGY) 2 January 1997 (1997-01-02) * abstract * * page 2, line 1 - page 2, line 42 * * page 3, line 32 - page 4, line 17 * * page 5, line 43 - page 6, line 21 * | 1-31 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 13 June 2002 | Boyadzhiev, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 01 30 7210

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2002

| Patent document cited in search report | | Publication date | Patent family member(s) | | Publication date |
|---|---|---|---|---|---|
| WO 0004474 | A | 27-01-2000 | US | 6334127 B1 | 25-12-2001 |
| | | | AU | 4973999 A | 07-02-2000 |
| | | | EP | 1099177 A1 | 16-05-2001 |
| | | | WO | 0004474 A1 | 27-01-2000 |
| EP 0751471 | A | 02-01-1997 | AU | 6282596 A | 05-02-1997 |
| | | | CA | 2225790 A1 | 23-01-1997 |
| | | | EP | 0751471 A1 | 02-01-1997 |
| | | | JP | 11509019 T | 03-08-1999 |
| | | | US | 6041311 A | 21-03-2000 |
| | | | US | 6049777 A | 11-04-2000 |
| | | | US | 6092049 A | 18-07-2000 |
| | | | US | 6112186 A | 29-08-2000 |
| | | | WO | 9702537 A1 | 23-01-1997 |
| | | | US | 5872850 A | 16-02-1999 |

EPO FORM P0459

For more details about this annex : see Official Journal of the European Patent Office, No. 12/82